(19) Europäisches Patentamt
European Patent Office
Office européen des brevets

(11) **EP 2 993 719 B1**

(12) **EUROPEAN PATENT SPECIFICATION**

(45) Date of publication and mention of the grant of the patent:
**09.01.2019 Bulletin 2019/02**

(51) Int Cl.:
*H01M 4/525* (2010.01)     *H01M 4/505* (2010.01)
*H01M 10/052* (2010.01)   *C01G 53/00* (2006.01)
*H01M 4/131* (2010.01)    *H01M 4/134* (2010.01)
*H01M 4/36* (2006.01)     *H01M 4/38* (2006.01)
*H01M 10/0525* (2010.01)  *H01M 10/30* (2006.01)
*H01M 4/02* (2006.01)

(21) Application number: **14792075.5**

(22) Date of filing: **29.04.2014**

(86) International application number:
**PCT/KR2014/003815**

(87) International publication number:
**WO 2014/178628 (06.11.2014 Gazette 2014/45)**

(54) **POSITIVE ELECTRODE MATERIAL FOR LITHIUM SECONDARY BATTERY**

POSITIVES ELEKTROANODENMATERIAL FÜR LITHIUM-SEKUNDÄRBATTERIE

MATÉRIAU D'ÉLECTRODE POSITIVE POUR BATTERIE SECONDAIRE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2013 KR 20130047797**
**31.07.2013 KR 20130091250**

(43) Date of publication of application:
**09.03.2016 Bulletin 2016/10**

(73) Proprietor: **IUCF-HYU (Industry-University Cooperation Foundation Hanyang University)**
**Seoul 133-791 (KR)**

(72) Inventors:
• **SUN, Yang-Kook**
**Seoul 135-280 (KR)**
• **NOH, Hyung Joo**
**Bucheon-si**
**Gyeonggi-do 420-721 (KR)**
• **YOUN, Sung June**
**Busan 617-030 (KR)**

(74) Representative: **J A Kemp**
**14 South Square**
**Gray's Inn**
**London WC1R 5JJ (GB)**

(56) References cited:
**EP-A1- 2 497 139**     **EP-A1- 3 007 253**
**WO-A1-2012/132155**   **CN-A- 102 891 309**
**CN-B- 102 368 548**    **KR-A- 20110 027 324**
**KR-A- 20120 009 891**   **KR-A- 20120 053 464**
**KR-A- 20120 121 235**   **KR-A- 20130 001 703**
**KR-B1- 100 752 703**

**Description**

FIELD OF THE INVENTION

Embodiments of the inventive concepts described herein relate to a positive electrode active material for lithium secondary battery, and more particularly, relate to a positive electrode active material for lithium secondary battery including a core portion in which concentrations of nickel, manganese, and cobalt have gradients in a direction from the center to the surface or concentrations of nickel, manganese, and cobalt are constant; a concentration gradient portion which is formed on the outside of the core portion and in which concentrations of nickel, manganese, and cobalt have gradients; and a shell portion which is formed on the outside of the concentration gradient portion and in which concentrations of nickel, manganese, and cobalt are constant.

BACKGROUND

A lithium secondary battery has an operating voltage of 3.7 V or more, and the demand for the lithium secondary battery as a power source for driving portable electronic information and communication devices is increasing day by day since the energy density per unit weight thereof is higher than a nickel-cadmium battery or a nickel-hydrogen battery.

In recent years, the study to hybridize an internal combustion engine and a lithium secondary battery as a power source for an electric vehicle has been actively carried out in US, Japan, Europe, and the like. A battery for plug-in hybrid (PHEV) used in a vehicle which has a travel distance of less than 60 miles a day is actively developed mainly in US. The battery for PHEV is a battery which has characteristics close to an electric vehicle, and thus it is a great task to develop a battery having a high capacity. In particular, it is the most important task to develop a positive electrode material which has a high tap density of 2.0 g/cc or more and a high capacity of 230 mAh/g or more.

The positive electrode material which has been currently commercialized or is being developed includes $LiCoO_2$, $LiNiO_2$, $LiMnO_2$, $LiMn_2O_4$, $Li_{1+x}[Mn_{2-x}M_x]O_4$, $LiFePO_4$, and the like. Among these, $LiCoO_2$ is an excellent material which has stable charge and discharge characteristics, excellent electron conductivity, a high battery voltage, high stability, and flat discharge voltage characteristics. However, Co is expensive and toxic to a human body and its reserves is little, and thus the development of another positive electrode material is desired. Moreover, the thermal characteristics of $LiCoO_2$ are significantly poor since its crystal structure is unstable due to delithiation during charge.

In order to improve this, it is attempted that the start temperature of heat generation is shifted to a higher temperature side by substituting some of Ni with transition metal elements or the exothermic peak is made broad so as to prevent a rapid heat generation. However, satisfactory results have not yet been obtained. In other words, the material $LiNi_{1-x}Co_xO_2$ (x = 0.1 - 0.3) obtained by substituting some of Ni with Co exhibits excellent charge and discharge characteristics and cycle-life characteristics but the problem of thermal stability has not yet been solved. In addition, in European Patent No. 0872450, the material $Li_aCo_bMn_cM_dNi_{1-(b+c+d)}O_2$ (M = B, Al, Si. Fe, Cr, Cu, Zn, W, Ti, Ga) obtained by substituting some of Ni with other metals as well as Co and Mn is disclosed, but the thermal stability of the Ni-based material has not yet been solved.

In order to overcome such a disadvantage, a lithium transition metal oxide which has a concentration gradient of the metal composition has been proposed in Korea Patent Unexamined Publication No. 2005-0083869. In this method, a material is prepared in a double layer by once synthesizing an inner material having a certain composition and then covering it with a material having a different composition and then mixed with a lithium salt, and the mixture is subjected to the heat treatment. A commercially available lithium transition metal oxide may be used as the inner material.

In this method, however, the metal composition of the positive electrode active material discontinuously changes between the inner material and the outer material thus prepared but not continuously and gradually changes. Moreover, the powder synthesized by this invention has a low tap density since ammonia of a chelating agent is not used therein, and thus it is not suitable for being used as a positive electrode active material for a lithium secondary battery.

In order to improve this point, in Korea Patent Unexamined Publication No. 2007-0097923, a positive electrode active material which has an inner bulk portion and an outer bulk portion and a continuous concentration distribution of the metal components depending on the location in the outer bulk portion has been proposed. However, in this method, the concentration is constant in the inner bulk portion and the metal composition is only changed in the outer bulk portion, and thus it is desired to develop a positive electrode active material having a new structure so as to exhibit excellent stability and to have a higher capacity.

In addition, the reversible capacity relatively increases but the thermal stability significantly decreases when the content of Ni is high, and when the content of Ni is relatively low and the content of Mn is high, the thermal stability is improved but the advantage in terms of energy density is eliminated as compared to the existing $LiCoO_2$. Hence, it is desired to have the optimum composition of Ni : Mn : Co and the ratio of Li/M in terms of capacity and safety in order to completely or partly replace the existing $LiCoO_2$.

The control of the ratio of Li/M in the positive electrode active material is associated with the content of Mn in the transition metal composite, and it is possible to insert an excess amount of lithium into the transition metal layer when the amount of Mn substituted is equal to or more than a certain value. In terms of battery characteristics, a relatively high high-rate characteristics and cycle-life characteristics are exerted by the excess amount of lithium inserted into the transition metal layer, and it is easy to insert lithium into the transition metal layer in a composition system having a relatively high content of Mn as compared to the ternary system having a low content of Mn, thus it is possible to control the content of watersoluble bases such as $Li_2CO_3$ and LiOH which remain on the surface of the active material after firing by minimizing the amount of lithium added at the time of synthesis. The residual lithium components are decomposed during charge and discharge or react with the electrolytic solution to generate $CO_2$ gas, as a result, the swelling phenomenon of the battery is caused and particularly the high-temperature stability of the battery deteriorates.

In particular, impurities such as LiOH or $Li_2CO_3$ are formed on the surface when a ternary positive electrode active material containing Ni as a main component is exposed to air and moisture (see Reaction Formulas 1 and 2; J. Power Sources, 134, page 293, 2004).

Reaction Formula 1: $\quad$ $LiNiO_2 + yH2O \rightarrow Li_{1-y}NiO_{2-y/2} + yLiOH$

Reaction Formula 2: $\quad$ $LiNi_{0.8}Co_{0.15}Al_{0.05}O_2 + 4xO_2 + yH_2O \rightarrow Li_{1-y}Ni_{0.8}Co_{0.15}Al_{0.05}O_2 + 2xLi_2CO_3$

The residual lithium component thus formed raise the pH during the preparation of slurry for plate, the slurry containing NMP (1-methyl-2-pyrrolidinone) and a binder begins to be polymerized to form gel, and thus a problem is caused in the plate producing process. Lithium hydroxide decreases the dispersibility of the positive electrode active material, a binder, a conductive material, and the like in a solvent, and thus it takes a long period of time to stabilize the viscosity of the slurry. In addition, when the slurry is coated on the current collector while the viscosity is not stabilized, it is not uniformly coated on the current collector, the smoothness of the electrode surface decreases, and thus the performance of the battery deteriorates.

CN 102 368 548 B describes a positive electrode active material for a lithium secondary battery. CN 102 891 309 A describes a method for preparing a concentration gradient spherical lithium-rich cathode material.

Hence, a number of prior arts have focused on the improvement of characteristics and the producing process of the positive electrode active material containing nickel as a main component in order to decrease the amount of residual lithium.

SUMMARY

Embodiments of the inventive concepts may provide a positive electrode active material having a new structure which includes a core portion and a shell portion and in which the content of nickel is increased to have a high capacity and the content of residual lithium is decreased.

One aspect of embodiments of the inventive concept is directed to provide a positive electrode active material for lithium secondary battery.

According to an embodiment of the inventive concept, the positive electrode active material for lithium secondary battery may include a core portion, a concentration gradient portion that is formed on the outside of the core portion and has gradients of concentrations of nickel, manganese, and cobalt, and a shell portion that is formed on the outside of the concentration gradient portion and has constant concentrations of nickel, manganese, and cobalt, wherein nickel is the main component out of nickel, manganese, and cobalt.

According to an embodiment of the inventive concept, the positive electrode active material for lithium secondary battery includes the shell portion having the constant concentrations of nickel, manganese, and cobalt on the outside of the core portion, and thus it is possible to decrease the amount of residual lithium on the surface of a particle although the concentration of nickel in the inside of the particle is high.

According to an embodiment of the inventive concept, in the positive electrode active material, the core portion may have constant concentrations of nickel, manganese, and cobalt.

According to an embodiment of the inventive concept, in the positive electrode active material, the concentration of nickel in the core portion may be equal to the maximum value of the concentration of nickel in the concentration gradient portion.

According to an embodiment of the inventive concept, in the positive electrode active material, the core portion may have gradients of concentrations of nickel, manganese, and cobalt.

In embodiments of the inventive concept, the fact that the concentrations of nickel, manganese, and cobalt in the core portion have gradients may mean that the concentrations of nickel, manganese, and cobalt change depending on the distance from the center of the positive electrode active material particle.

According to an embodiment of the inventive concept, in the positive electrode active material, the core portion may have constant magnitudes of concentration gradients of nickel, manganese, and cobalt. According to embodiments of the inventive concept, the magnitudes of concentration gradients of nickel, manganese, and cobalt may be constant in the core portion, and thus relational functions of the concentrations of nickel, manganese, and cobalt according to the distance from the center may be linear.

In addition, according to embodiments of the inventive concept, the magnitudes of concentration gradients of nickel, manganese, and cobalt of the core portion may change depending on the distance from the center of the positive electrode active material particle. In other words, the relational function of the concentrations of nickel, manganese, and cobalt and the according to distance from the center may be curved. In other words, the rate of change in concentrations of nickel, manganese, and cobalt at the location having a distance D from the center in the core portion may include a constant, a linear function, or a polynomial function.

According to an embodiment of the inventive concept, in the positive electrode active material, the core portion may include n ($5 \geq n \geq 1$) core portions in which magnitudes of concentration gradients of nickel, manganese, and cobalt are represented by CSn-Ni, CSn-Mn, and CSn-Co, respectively. In a case in which n is 2, the core portion may include a first core portion in which magnitudes of concentration gradients of nickel, manganese, and cobalt are represented by CS1-Ni, CS1-Mn, and CS1-Co, respectively, and a second core portion in which magnitudes of concentration gradients of nickel, manganese, and cobalt are represented by CS2-Ni, CS2-Mn, and CS2-Co, respectively.

According to an embodiment of the inventive concept, in the positive electrode active material, the concentration gradients of nickel, manganese, and cobalt in the core portion may have linear shapes or curved shapes.

According to an embodiment of the inventive concept, in the positive electrode active material, the magnitudes |CSn-Ni|, |CSn-Mn|, and |CSn-Co| of concentration gradients of nickel, manganese, and cobalt in the n core portions and magnitudes |CG-Ni|, |CG-Mn|, and |CG-Co| of concentration gradients of nickel, manganese, and cobalt in the concentration gradient portion may satisfy the following relational expressions.

$$|CSn\ Ni| \leq |CG\text{-}Ni|$$

$$|CSn\text{-}Mn| \leq |CG\text{-}Mn|$$

$$|CSn\text{-}Co| \leq |CG\text{-}Co|$$

In other words, according to an embodiment of the inventive concept, in the positive electrode active material, the absolute values of the magnitudes of concentration gradients in the concentration gradient portion may be equal to or greater than the absolute values of the magnitudes of concentration gradients in the core portion.

According to an embodiment of the inventive concept, in the positive electrode active material, the concentration gradient portion may include n ($5 \geq n \geq 1$) concentration gradient portions in which magnitudes of concentration gradients of nickel, manganese, and cobalt are represented by CGn-Ni, CGn-Mn, and CGn-Co, respectively.

According to an embodiment of the inventive concept, in the positive electrode active material, the shell portion may include n ($5 \geq n \geq 1$) shell portions in which concentrations of nickel, manganese, and cobalt are represented by SCn-Ni, SCn-Mn, and SCn-Co, respectively.

According to an embodiment of the inventive concept, in the positive electrode active material, the concentrations SCn-Ni, SCn-Mn, and SCn-Co of nickel, manganese, and cobalt in the nth shell portion may satisfy the following relational expressions.

$$0.3 \leq SCn\text{-}Ni \leq 0.8$$

$$0.2 \leq SCn\text{-}Mn \leq 0.4$$

$$0.05 \leq SCn\text{-}Co \leq 0.2$$

According to an embodiment of the inventive concept, in the positive electrode active material, the concentration of nickel in the nth shell portion preferably may satisfy the following relational expression.

$$0.5 \leq SCn\text{-}Ni \leq 0.7$$

According to an embodiment of the inventive concept, in the positive electrode active material, the concentrations SC1-Ni, SC1-Mn, and SC1-Co of nickel, manganese, and cobalt in the first shell portion may be equal to the concentrations of nickel, manganese, and cobalt of the outermost part of the concentration gradient portion, namely, the contact point between the concentration gradient portion and the first shell portion.

According to an embodiment of the inventive concept, in the positive electrode active material, the concentration SC1-Ni of nickel in the shell portion may be equal to the minimum value of the concentration of nickel in the concentration gradient portion. In other words, the concentration of nickel in the shell portion may be continuously connected to the concentration gradient of nickel in the concentration gradient portion.

According to an embodiment of the inventive concept, in the positive electrode active material, the concentration SC1-Ni of nickel in the shell portion may be different from the minimum value of the concentration of nickel in the concentration gradient portion. For example, the concentration SC1-Ni of nickel in the shell portion may be higher than the minimum value of the concentration of nickel in the concentration gradient portion. On the other hand, the concentration SC1-Ni of nickel in the shell portion may be lower than the minimum value of the concentration of nickel in the concentration gradient portion. In other words, the concentration SC1-Ni of nickel in the shell portion may be discontinuous from the concentration gradient of nickel in the concentration gradient portion.

According to an embodiment of the inventive concept, in the positive electrode active material, the concentration gradients of nickel, manganese, and cobalt in the concentration gradient portion may have linear shapes or curved shapes.

According to an embodiment of the inventive concept, in the positive electrode active material, the shell portion has a thickness of from 0.1 $\mu$m to 0.6 $\mu$m. In the positive electrode active material, an effect derived from the formation of the shell portion may be not obtained when the thickness of the shell portion is 0.1 $\mu$m or less and the overall capacity rather may decrease when the thickness is 0.6 $\mu$m or more.

According to an embodiment of the inventive concept, in the positive electrode active material, the volume of the shell portion may be 30% or less of the total volume of the particle.

According to an embodiment of the inventive concept, in the positive electrode active material, the content of $Li_2CO_3$ of the surface of the positive electrode active material may be 2,000 ppm or less.

According to an embodiment of the inventive concept, in the positive electrode active material, the content of LiOH of the surface of the positive electrode active material may be 2,000 ppm or less.

BRIEF DESCRIPTION OF THE FIGURES

The above and other objects and features will become apparent from the following description with reference to the following figures, wherein like reference numerals refer to like parts throughout the various figures unless otherwise specified, and wherein

Fig. 1 illustrates the concentrations of Ni, Mn, Co depending on the distance from the center in the particles prepared according to an embodiment of the inventive concept and Comparative Example, which are measured by EDX.

Fig. 2 illustrates SEM images of the particles prepared according to an embodiment of the inventive concept and Comparative Example.

Figs. 3 and 4 illustrate the measurement results on charge and discharge characteristics, cycle-life characteristics, and DSC characteristics of the batteries containing the active materials prepared according to an embodiment of the inventive concept and Comparative Example, respectively.

Fig. 5 illustrates the concentrations of Ni, Mn, Co depending on the distance from the center in the particles prepared according to an embodiment of the inventive concept and Comparative Example, which are measured by EDX.

Fig. 6 illustrates the measurement results on charge and discharge characteristics of the batteries containing the active materials prepared according to an embodiment of the inventive concept and Comparative Example.

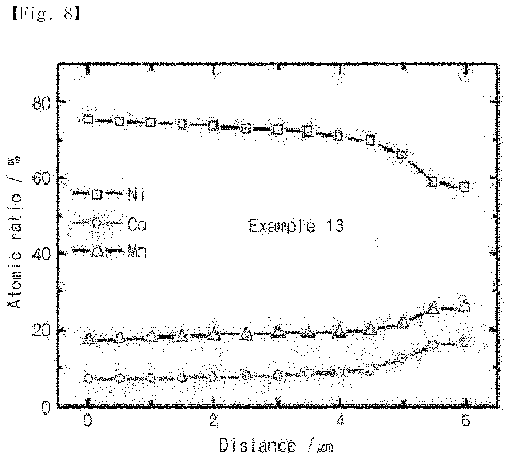

Figs. 7 and 8 illustrate the concentrations of Ni, Mn, Co depending on the distance from the center in the particles prepared according to embodiments of the inventive concept, which are measured by EDX.

Figs. 9 to 11 illustrate the measurement results on charge and discharge characteristics, cycle-life characteristics, and DSC characteristics of the particles prepared according to an embodiment of the inventive concept and Comparative Example, respectively.

Figs. 12 to 14 illustrate the measurement results on charge and discharge characteristics, cycle-life characteristics, and DSC characteristics of the particles prepared according to an embodiment of the inventive concept and Comparative Example, respectively.

Fig. 15 illustrates the concentrations of Ni, Mn, Co depending on the distance from the center in the particles prepared according to an embodiment of the inventive concept, which are measured by EDX.

Figs. 16 to 18 illustrate the measurement results on charge and discharge characteristics, cycle-life characteristics, and DSC characteristics of the particles prepared according to an embodiment of the inventive concept and Comparative Example, respectively.

Fig. 19 illustrates the tap density and surface area by the BET method of the particles prepared according to an embodiment of the inventive concept and Comparative Example.

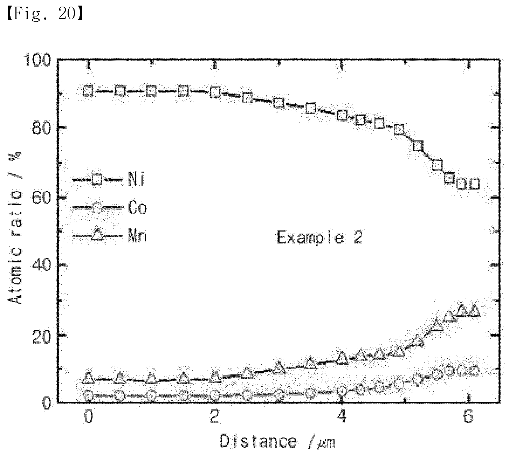

Fig. 20 illustrates the concentrations of Ni, Mn, Co depending on the distance from the center in the particles prepared according to an embodiment of the inventive concept, which are measured by EDX.

Figs. 21 to 23 illustrate the measurement results on charge and discharge characteristics, cycle-life characteristics, and DSC characteristics of the particles prepared according to an embodiment of the inventive concept and Comparative Example, respectively.

Fig. 24 illustrates the concentrations of Ni, Mn, Co depending on the distance from the center in the particles prepared according to an embodiment of the inventive concept, which are measured by EDX.

Figs. 25 to 27 illustrate the measurement results on charge and discharge characteristics, cycle-life characteristics, and DSC characteristics of the particles prepared according to an embodiment of the inventive concept and Comparative Example, respectively.

## DETAILED DESCRIPTION

Embodiments of the inventive concepts described.

<Examples>

Into a coprecipitation reactor (volume: 16 L, output of rotary motor: 80 W or more), 2.5 L of distilled water was introduced, $N_2$ gas was then supplied thereto at a rate of 2 L/min, and the distilled water was stirred at 400 rpm while maintaining the temperature of the reactor at 45°C.

A first aqueous metal solution and a second aqueous metal solution were prepared by mixing nickel sulfate, cobalt sulfate, and manganese sulfate so as to have a composition of $Ni_{x1}Co_{y1}Mn_{z1}OH_2$ (X1, Y1, Z1) and a composition of $Ni_{x2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion and the concentration gradient portion which had a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, only the second aqueous metal solution was supplied into the reactor for a certain period of time to form the shell portion having constant concentrations of nickel, manganese, and cobalt on the outside of the core portion and the concentration gradient portion which had a concentration gradient, thereby producing a composite metal hydroxide.

The concentrations of the aqueous metal solutions in Examples 1-1 to 1-6 are as presented in the following Table 1.

[Table 1]

| | First aqueous metal solution | | | Second aqueous metal solution | | |
|---|---|---|---|---|---|---|
| | Ni | Co | Mn | Ni | Co | Mn |
| Example 1 | 75 | 0 | 25 | 55 | 20 | 25 |
| Example 2 | 70 | 0 | 30 | 50 | 20 | 30 |
| Example 3 | 78 | 0 | 22 | 54 | 19 | 27 |
| Example 4 | 90 | 0 | 10 | 54 | 15 | 31 |
| Example 5 | 90 | 5 | 5 | 65 | 10 | 25 |
| Example 6 | 96 | 0 | 1 | 54 | 15 | 31 |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 :

1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples>

In Comparative Example 1, the positive electrode active material particles containing only the core portion and the concentration gradient portion which had a concentration gradient were prepared in the same manner as in Example 1 except that the shell portion having constant concentrations of nickel, manganese, and cobalt was not formed.

In Comparative Example 2, composite oxide particles having constant concentrations of nickel, manganese, and cobalt was prepared using an aqueous metal solution having a composition of $Ni_{55}Co_{20}Mn_{25}OH_2$ which corresponds to the composition of the shell portion in Example 1. In Comparative Example 3, composite oxide particles having constant concentrations of nickel, manganese, and cobalt was prepared using an aqueous metal solution having a composition of $Ni_{65}Co_{10}Mn_{25}OH_2$ which corresponds to the composition of the shell portion in Example 5.

<Experimental Example> Taking of EDX image

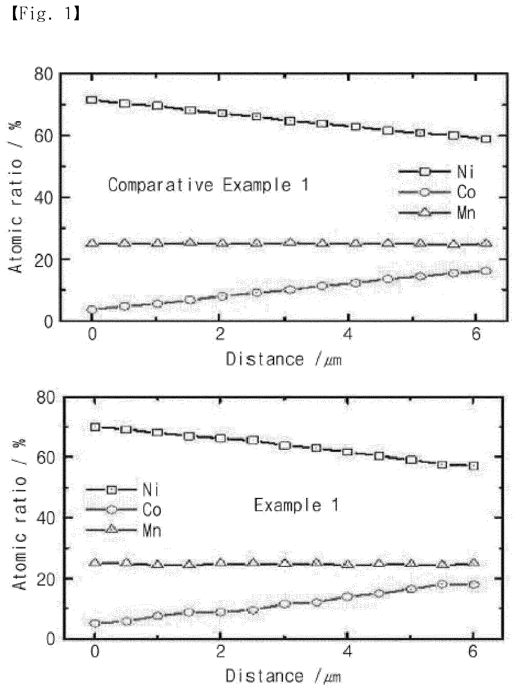

The concentrations of Ni, Mn, and Co depending on the distance from the center in the particles prepared in Example 1 and Comparative Example 1 were measured by EDX, and the results are illustrated in Fig. 1. From Fig. 1, it can be seen that the magnitude of the concentration gradient in the core portion and the concentration gradient portion is constant as the core portion and the concentration gradient portion have a concentration gradient, a shell portion that is continuous with respect to the core portion and the concentration gradient portion and has constant concentrations of nickel, manganese, and cobalt is formed, and the functional relation of the concentration to the distance is linear in the core portion and the concentration gradient portion in the case of the particles according to Example of the inventive concept.

<Experimental Example> Taking of SEM image

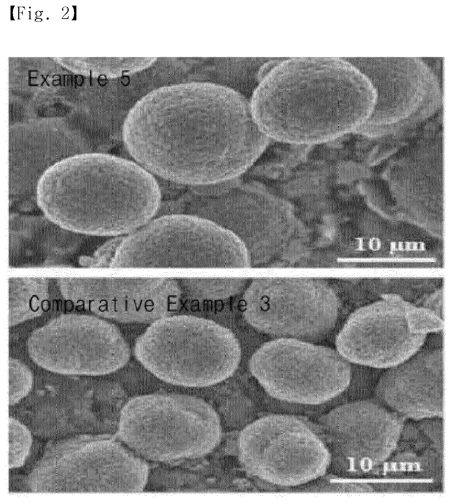

The images of the particles prepared in Example 5 and Comparative Example 3 were taken using a SEM, and the results are illustrated in Fig. 2.

<Experimental Example> Measurement of residual lithium

Into 100 ml of distilled water, 10 g of the active material particles prepared in Example 1 and Comparative Example 1 were added, respectively, stirred for 10 minutes, then filtered, and subjected to the titration with 10% hydrochloric acid, thereby determining the amount of residual lithium. The amounts of LiOH and $Li_2CO_3$ measured are as presented in the following Table 2.

[Table 2]

|  | Residual LiOH | $Li_2CO_3$ | Sum |
|---|---|---|---|
| Example 1 | 4728 | 2101 | 6829 |
| Comparative Example 1 | 5728 | 2733 | 8461 |

<Experimental Example> Measurement of charge and discharge characteristics, cycle-life characteristics, and DSC

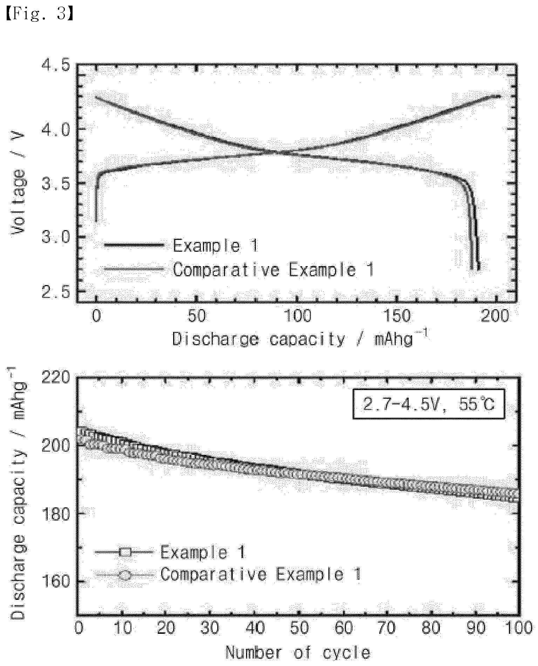

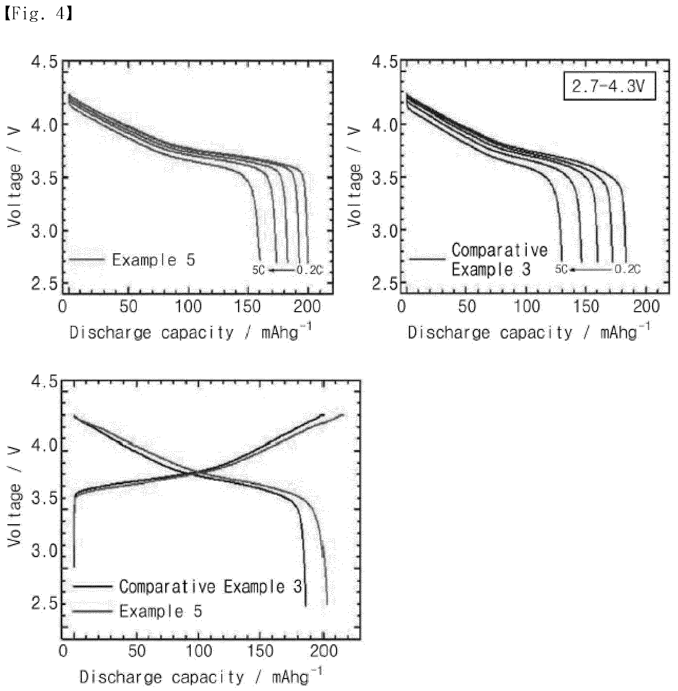

The charge and discharge characteristics, cycle-life characteristics, and DSC characteristics of the batteries containing the active materials prepared in Examples 1 to 6 and Comparative Examples 1 to 3 were measured, and the results are presented in the following Table 3 and illustrated in Figs. 3 and 4.

[Table 3]

|  | Discharge capacity | Cycle-life characteristics (100th) | DSC |
|---|---|---|---|
| Example 1 | 189 mAh/g | 95.2% | 288°C |
| Example 2 | 184 mAh/g | 96.2% | 298°C |
| Example 3 | 190 mAh/g | 96.0% | 289°C |

(continued)

|  | Discharge capacity | Cycle-life characteristics (100th) | DSC |
|---|---|---|---|
| Example 4 | 195 mAh/g | 96.1% | 288°C |
| Example 5 | 203 mAh/g | 94.3% | 266°C |
| Example 6 | 196 mAh/g | 95.2% | 286°C |
| Comparative Example 1 | 191 mAh/g | 96.7% | 273°C |
| Comparative Example 2 | 176 mAh/g | 89.2% | 267°C |
| Comparative Example 3 | 186 mAh/g | 90.4% | 272°C |

<Examples>

Into a coprecipitation reactor (volume: 16 L, output of rotary motor: 80 W or more), 2.5 L of distilled water was introduced, $N_2$ gas was then supplied thereto at a rate of 2 L/min, and the distilled water was stirred at 400 rpm while maintaining the temperature of the reactor at 45°C.

A first aqueous metal solution and a second aqueous metal solution were prepared by mixing nickel sulfate, cobalt sulfate, and manganese sulfate so as to have a composition of $Ni_{x1}Co_{y1}Mn_{z1}OH_2$ (X1, Y1, Z1) and a composition of $Ni_{x2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion and the concentration gradient portion which had a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, a third aqueous metal solution prepared by mixing nickel sulfate, cobalt sulfate, and manganese sulfate so as to have a constant composition of $Ni_{x3}Co_{y3}Mn_{z3}OH_2$ was supplied into the reactor to form the shell portion in which the concentrations of nickel, manganese, and cobalt were constant but different from those at the outermost part of the core portion and the concentration gradient portion, thereby producing a composite metal hydroxide.

The concentrations of the aqueous metal solutions in Examples 7 to 10 are as presented in the following Table 4.

[Table 4]

|  | First aqueous metal solution | | | Second aqueous metal solution | | | Third aqueous metal solution | | | Thickness of shell portion |
|---|---|---|---|---|---|---|---|---|---|---|
|  | Ni | Co | Mn | Ni | Co | Mn | Ni | Co | Mn |  |
| Example 7 | 85 | 6 | 9 | 62 | 13 | 25 | 48 | 20 | 32 | 0.5 μm |
| Example 8 | 85 | 6 | 9 | 62 | 13 | 25 | 48 | 20 | 32 | 1.0 μm |
| Example 9 | 90 | 5 | 5 | 65 | 10 | 25 | 40 | 30 | 30 | 0.3 μm |
| Example 10 | 90 | 5 | 5 | 65 | 10 | 25 | 50 | 20 | 30 | 0.3 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples>

In Comparative Example 4, positive electrode active material particles were prepared in the same manner as in Example 7 except that the shell portion was not formed.

In Comparative Example 5, positive electrode active material particles were prepared in the same manner as in Example 9 except that the shell portion was not formed.

<Experimental Example> Taking of EDX image

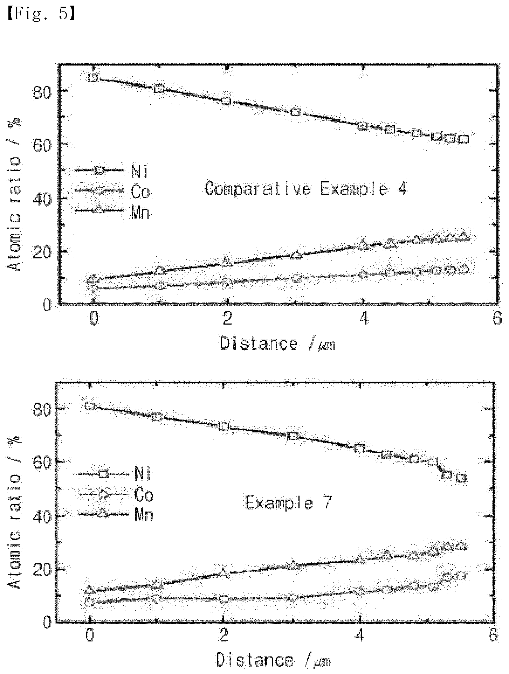

The concentrations of Ni, Mn, and Co depending on the distance from the center in the particles prepared in Example 7 and Comparative Example 4 were measured by EDX, and the results are illustrated in Fig. 5.

From Fig. 5, it can be seen that the magnitude of the concentration gradient in the core portion and the concentration gradient portion is constant as a shell portion having constant concentrations of nickel, manganese, and cobalt that is formed on the outside of the core portion having a concentration gradient and the functional relation of the concentration to the distance is linear in the core portion and the concentration gradient portion in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 7 to 10 and Comparative Examples 4 and 5 were measured, and the results are presented in the following Table 5.

[Table 5]

|  | Discharge capacity | Cycle-life characteristics (100th) | DSC |
|---|---|---|---|
| Example 7 | 196 mAh/g | 96.3% | 289°C |
| Example 8 | 192 mAh/g | 97.7% | 297°C |
| Example 9 | 196 mAh/g | 96.3% | 289°C |
| Example 10 | 192 mAh/g | 97.7% | 297°C |
| Comparative Example 4 | 199 mAh/g | 94.3% | 271°C |
| Comparative Example 5 | 204 mAh/g | 93.2% | 263°C |

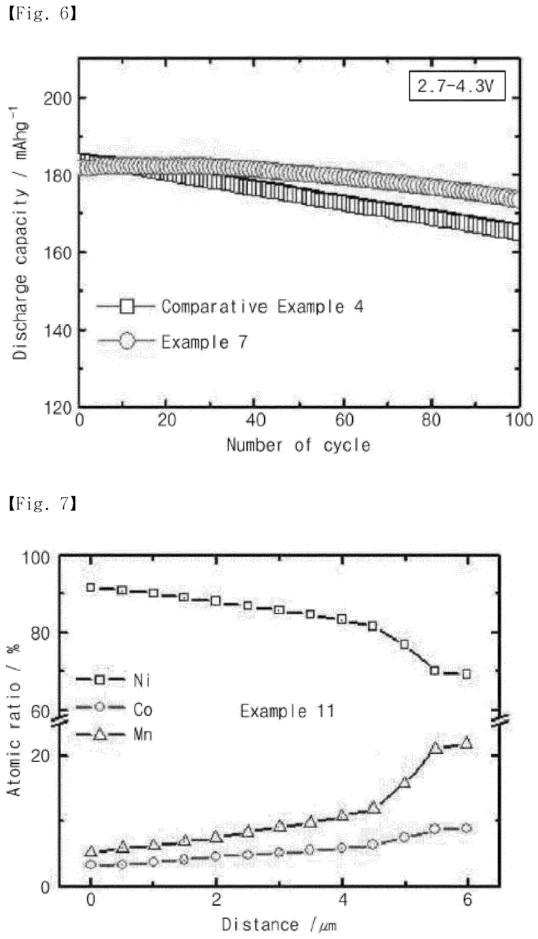

The charge and discharge characteristics of the batteries containing the active materials prepared in Example 7 and Comparative Example 4 were measured, and the results are illustrated in Fig. 6.

<Examples>

In order to produce particles having different magnitudes of concentration gradient in the core portion and the concentration gradient portion, first, a first aqueous metal solution and a second aqueous metal solution were prepared by mixing nickel sulfate, cobalt sulfate, and manganese sulfate so as to have a composition of $Ni_{x1}Co_{y1}Mn_{z1}OH_2$ (X1, Y1, Z1) and a composition of $Ni_{x2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion having a first magnitude of concentration gradient.

Thereafter, a third aqueous metal solution was prepared by mixing nickel sulfate, cobalt sulfate, and manganese sulfate so as to have a constant composition of $Ni_{x3}Co_{y3}Mn_{z3}OH_2$, the third aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the concentration gradient portion having a second magnitude of concentration gradient.

Thereafter, only the third aqueous metal solution prepared by mixing nickel sulfate, cobalt sulfate, and manganese sulfate so as to have a constant composition of $Ni_{x3}Co_{y3}Mn_{z3}OH_2$ was supplied into the reactor to form the shell portion in which the concentrations of nickel, manganese, and cobalt were constant and the same as those at the outermost part of the concentration gradient portion having a second magnitude of concentration gradient. The concentrations of the aqueous metal solutions thus prepared in Examples 11 to 20 are as presented in the following Table 6.

[Table 6]

| | First aqueous metal solution | | | Second aqueous metal solution | | | Third aqueous metal solution | | | |
|---|---|---|---|---|---|---|---|---|---|---|
| | Ni | Co | Mn | Ni | Co | Mn | Ni | Co | Mn | Thickness of shell portion |
| Example 11 | 85 | 6 | 9 | 62 | 13 | 25 | 48 | 20 | 32 | 0.3 μm |
| Example 12 | 85 | 6 | 9 | 62 | 13 | 25 | 48 | 20 | 32 | 0.5 μm |
| Example 13 | 90 | 5 | 5 | 65 | 10 | 25 | 40 | 30 | 30 | 0.5 μm |
| Example 14 | 90 | 5 | 5 | 65 | 10 | 25 | 50 | 20 | 30 | 0.2 μm |
| Example 15 | 85 | 1 | 14 | 76 | 9 | 15 | 64 | 11 | 25 | 0.3 μm |
| Example 16 | 90 | 1 | 9 | 80 | 8 | 12 | 65 | 10 | 25 | 0.5 μm |
| Example 17 | 95 | 1 | 4 | 84 | 7 | 9 | 66 | 9 | 25 | 0.4 μm |
| Example 18 | 95 | 2 | 3 | 77 | 7 | 16 | 63 | 11 | 26 | 0.5 μm |
| Example 19 | 98 | 1 | 1 | 95 | 2 | 3 | 65 | 10 | 25 | 0.3 μm |
| Example 20 | 95 | 2 | 3 | 85 | 5 | 10 | 55 | 18 | 27 | 0.5 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples>

In Comparative Example 6, composite oxide particles having constant concentrations of nickel, manganese, and cobalt in the entire particle were prepared using an aqueous metal solution having a composition of $Ni_{80}Co_7Mn_{13}OH_2$ which corresponds to the average composition of Example 11.

In Comparative Example 7, particles of a composite oxide which was represented by $LiNi_{0.8}Co_{0.15}Al_{0.05}O_2$ and known to have a capacity of 200 mAh/g were used.

<Experimental Example> Taking of EDX image

The concentrations of Ni, Mn, and Co depending on the distance from the center in the particles prepared in Example 11 were measured by EDX, and the results are illustrated in Fig. 7. From Fig. 7, it can be seen that the concentration is linear with respect to the distance from the center, the magnitudes of the concentration gradient in the core portion and the concentration gradient portion are different from each other, and a shell portion having constant concentrations of nickel, manganese, and cobalt is formed on the outside of the concentration gradient portion in the case of the particles according to Example of the inventive concept.

The concentrations of Ni, Mn, and Co depending on the distance from the center in the particles prepared in Example 13 were measured by EDX, and the results are illustrated in Fig. 30. From Fig. 30, it can be seen that the concentration to the distance from the center has two straight lines having different inclinations, the magnitudes of the concentration gradient in the core portion and the concentration gradient portion are different from each other, and a shell portion having constant concentrations of nickel, manganese, and cobalt is formed on the outside of the core portion and the concentration gradient portion in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 11 to 20 and Comparative Examples 6 and 7 were measured, and the results are presented in the following Table 7.

[Table 7]

|  | Discharge capacity | Cycle-life characteristics (100th) | DSC |
|---|---|---|---|
| Example 11 | 221 mAh/g | 94.9% | 250°C |
| Example 12 | 211 mAh/g | 95.3% | 257°C |
| Example 13 | 201 mAh/g | 96.6% | 280°C |
| Example 14 | 205 mAh/g | 96.1% | 277°C |
| Example 15 | 204 mAh/g | 94.3% | 274°C |
| Example 16 | 212 mAh/g | 94.9% | 272°C |
| Example 17 | 216 mAh/g | 94.2% | 268°C |
| Example 18 | 207 mAh/g | 94.8% | 271°C |
| Example 19 | 220 mAh/g | 92.3% | 256°C |
| Example 20 | 209 mAh/g | 95.5% | 272°C |
| Comparative Example 6 | 203 mAh/g | 79.2% | 233°C |
| Comparative Example 7 | 198 mAh/g | 90.8% | 221°C |

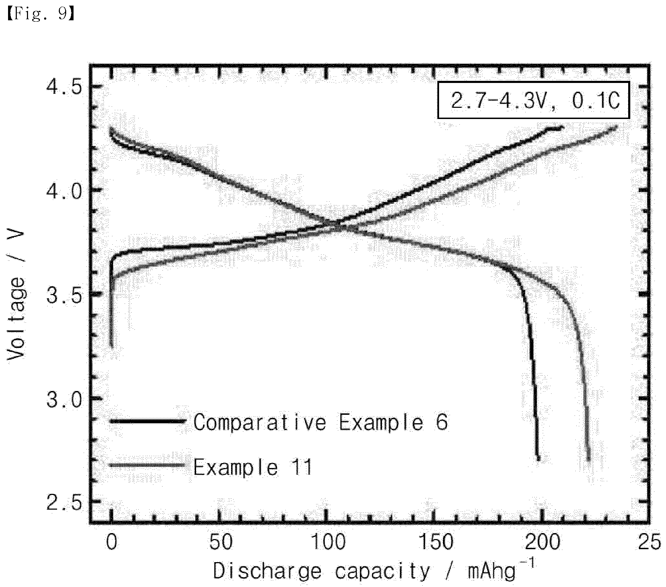

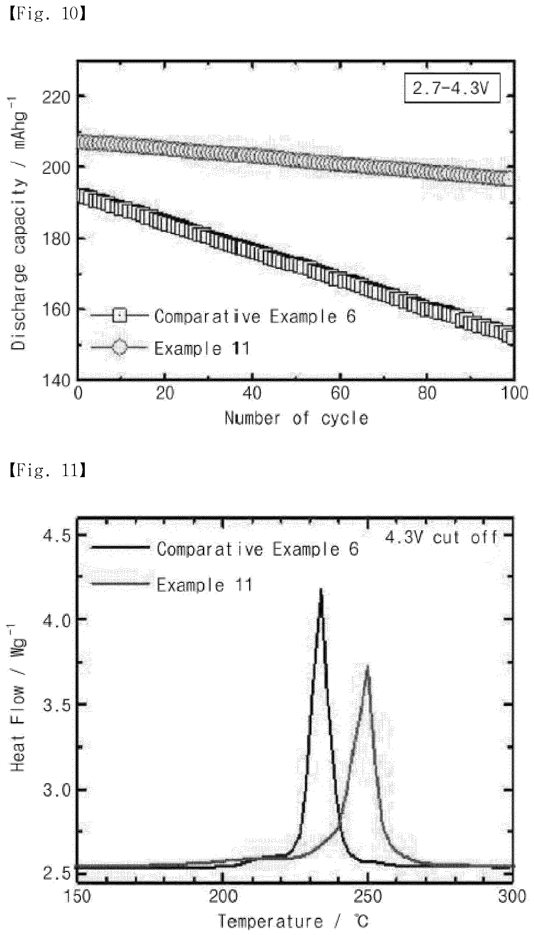

The charge and discharge characteristics, cycle-life characteristics, and DSC characteristics of the particles prepared in Example 11 and Comparative Example 6 were measured, and the results are illustrated in Figs. 9 to 11, respectively.

From Figs. 9 to 11, it has been confirmed that the average composition of the particles in Example 11 is the same as the composition of the particles in Comparative Example 6, but the charge and discharge characteristics, cycle-life characteristics, and thermal stability are greatly improved in Example 11 since the particles in Example 11 includes the core portion, and the concentration gradient portion, and the shell portion which has constant concentrations of nickel, manganese, and cobalt and is formed on the outside of the core portion.

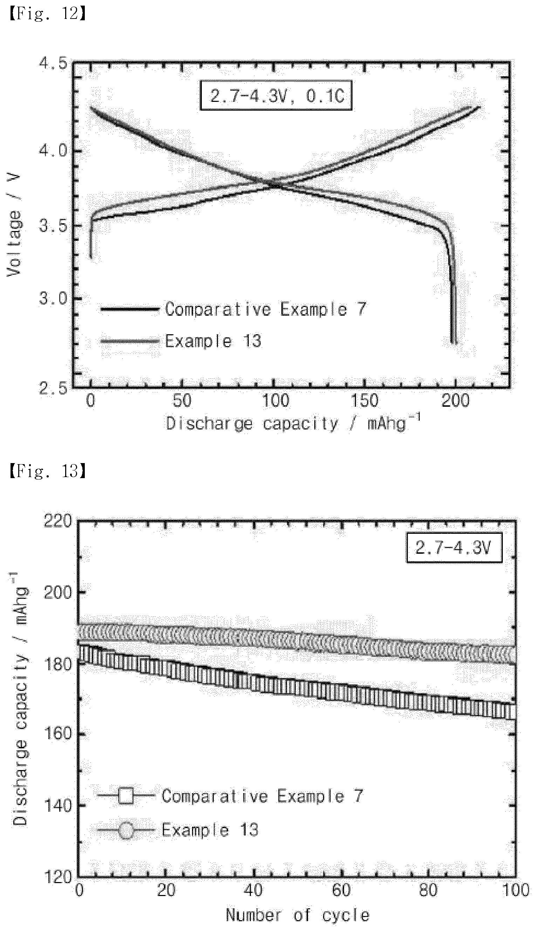

The charge and discharge characteristics, cycle-life characteristics, and DSC characteristics of the particles prepared in Example 13 and Comparative Example 7 were measured, and the results are illustrated in Figs. 12 to 14, respectively. From Figs. 12 to 14, it has been confirmed that the average composition of the particles in Example 13 is the same as the composition of the particles in Comparative Example 7, but the charge and discharge characteristics, cycle-life characteristics, and DSC characteristics are greatly improved in Example 13 as compared to those in Comparative Example 7 since the particles in Example 13 includes the core portion, and the concentration gradient portion, and the shell portion.

<Examples>

In order to produce particles having different magnitudes of concentration gradient in the core portion and the concentration gradient portion, first, a first aqueous metal solution and a second aqueous metal solution were prepared by mixing nickel sulfate, cobalt sulfate, and manganese sulfate so as to have a composition of $Ni_{x1}Co_{y1}Mn_{z1}OH_2$ (X1, Y1, Z1) and a composition of $Ni_{x2}Co_{y2}Mn_{z2}OH_2$ (x2, y2, z2), respectively, the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the core portion having a first concentration gradient.

Thereafter, a third aqueous metal solution prepared by mixing nickel sulfate, cobalt sulfate, and manganese sulfate so as to have a constant composition of $Ni_{x3}Co_{y3}Mn_{z3}OH_2$ and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the concentration gradient portion having a second concentration gradient.

Thereafter, only a fourth aqueous metal solution prepared by mixing nickel sulfate, cobalt sulfate, and manganese sulfate so as to have a constant composition of $Ni_{xa}Co_{y4}Mn_{z4}OH_2$ was supplied into the reactor to form the shell portion having constant concentrations of nickel, manganese, and cobalt.

The concentrations of the aqueous metal solutions thus prepared in Examples 21 to 28 are as presented in the following Table 8.

[Table 8]

|  | First aqueous metal solution | | | Second aqueous metal solution | | | Third aqueous metal solution | | | Fourth aqueous metal solution | | | |
|---|---|---|---|---|---|---|---|---|---|---|---|---|---|
|  | Ni | Co | Mn | Ni | Co | Mn | Ni | Co | Mn | Ni | Co | Mn | Thickness of shell portion |
| Example 21 | 95 | 2 | 3 | 90 | 4 | 6 | 67 | 9 | 24 | 60 | 15 | 25 | 0.3 μm |
| Example 22 | 95 | 2 | 3 | 85 | 5 | 10 | 67 | 11 | 22 | 60 | 13 | 27 | 0.4 μm |
| Example 23 | 96 | 2 | 2 | 91 | 4 | 5 | 70 | 10 | 20 | 63 | 12 | 25 | 0.5 μm |
| Example 24 | 95 | 2 | 3 | 90 | 4 | 6 | 67 | 9 | 24 | 56 | 17 | 27 | 0.2 μm |
| Example 25 | 96 | 2 | 2 | 85 | 5 | 10 | 67 | 11 | 22 | 55 | 15 | 30 | 0.3 μm |
| Example 26 | 95 | 2 | 3 | 90 | 4 | 6 | 75 | 8 | 17 | 57 | 16 | 27 | 0.5 μm |
| Example 27 | 96 | 2 | 2 | 91 | 3 | 6 | 80 | 7 | 13 | 57 | 16 | 27 | 0.4 μm |
| Example 28 | 85 | 5 | 10 | 80 | 7 | 13 | 55 | 15 | 30 | 45 | 20 | 35 | 0.5 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Example>

In Comparative Example 8, composite oxide particles having constant concentrations of nickel, manganese, and cobalt in the entire particle were prepared using an aqueous metal solution having a composition of $Ni_{76}Co_8Mn_{16}OH_2$ which corresponds to the average composition of Example 24.

<Experimental Example> Taking of EDX image

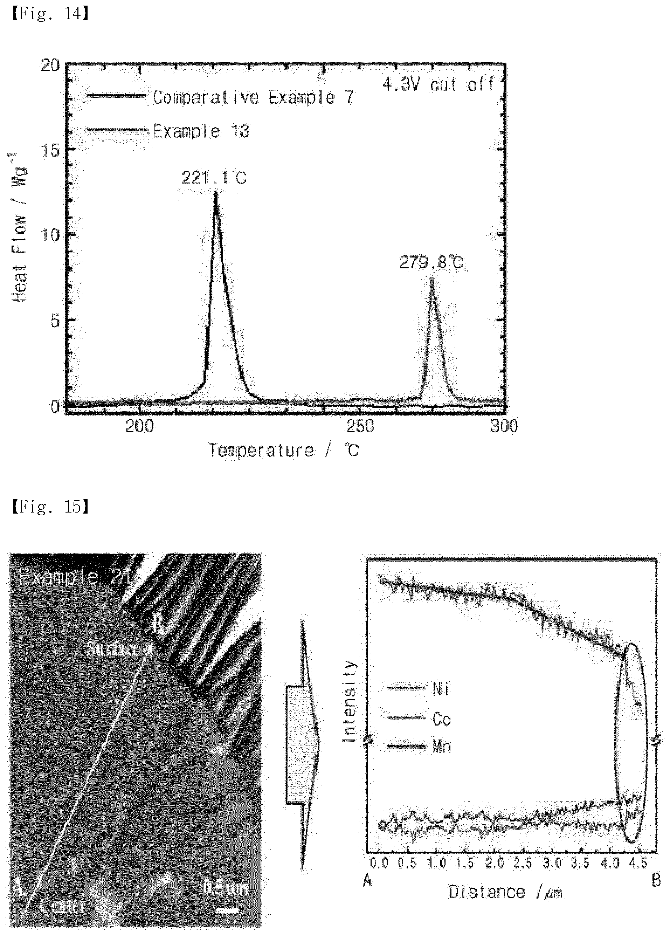

The image of the cross section of the particles prepared in Example 21 was taken using a TEM, and the concentrations of Ni, Mn, and Co depending on the distance from the center in the particles were measured by EDX, and the results are illustrated in Fig. 15.
From Fig. 15, it can be seen that the concentration is linear with respect to the distance from the center, the magnitudes of the concentration gradients of nickel, manganese, and cobalt in the core portion are constant, and the magnitudes of the concentration gradients are different in the concentration gradient portion, and the magnitudes of the concentration gradient in the core portion and the concentration gradient portion are two different from each other in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 21 to 28 and Comparative Examples 6 and 8 were measured, and the results are presented in the following Table 9.

[Table 9]

| | Discharge capacity | Cycle-life characteristics (100th) | DSC |
|---|---|---|---|
| Example 21 | 220 mAh/g | 95.9% | 260°C |
| Example 22 | 215 mAh/g | 95.2% | 262°C |
| Example 23 | 223 mAh/g | 93.7% | 257°C |
| Example 24 | 212 mAh/g | 96.2% | 270°C |
| Example 25 | 211 mAh/g | 96.0% | 271°C |
| Example 26 | 221 mAh/g | 93.9% | 263°C |
| Example 27 | 225 mAh/g | 94.2% | 253°C |
| Example 28 | 195 mAh/g | 97.8% | 291°C |
| Comparative Example 6 | 203 mAh/g | 79.2% | 237°C |
| Comparative Example 8 | 195 mAh/g | 82.5% | 233°C |

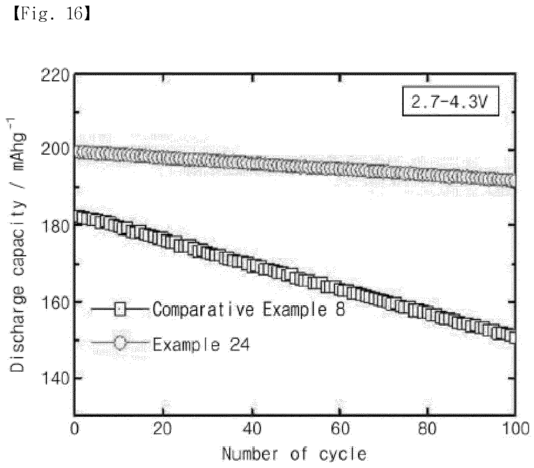

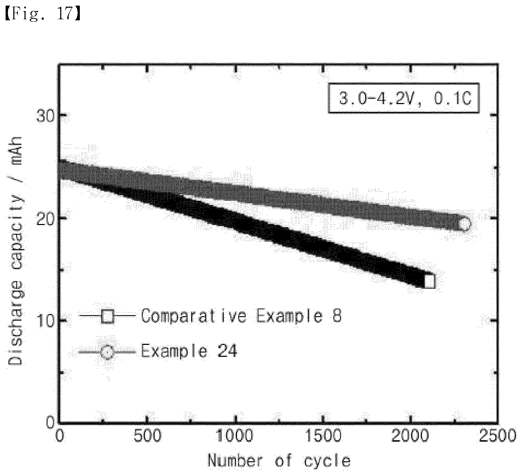

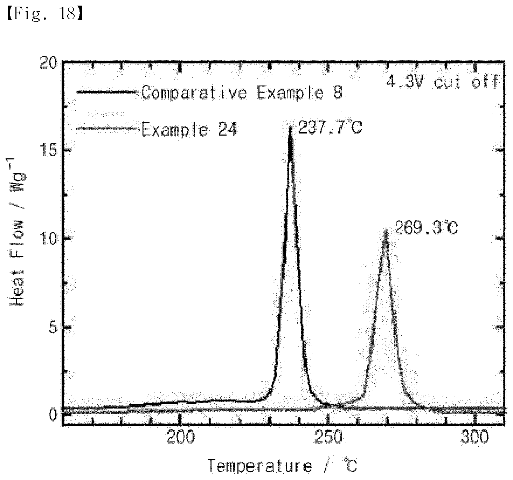

The charge and discharge characteristics, cycle-life characteristics, and DSC characteristics of the particles prepared in Example 24 and Comparative Example 8 were measured, and the results are illustrated in Figs. 16 to 18, respectively.

From Figs. 16 to 18, it has been confirmed that the average composition of the particles in Example 24 is the same as the composition of the particles in Comparative Example 8, but the charge and discharge characteristics, cycle-life characteristics, and DSC characteristics are greatly improved in Example 24 as compared to Comparative Example since the particles in Example 24 includes the core portion and the concentration gradient portion in which the concentrations of nickel, manganese, and cobalt have gradients and the shell portion in which the concentrations of nickel, manganese, and cobalt are constant.

<Experimental Example> Measurement of residual lithium

The amounts of residual LiOH and $Li_2CO_3$ in the particles prepared in Example 21 and Comparative Example 6 were measured, and the results are as presented in the following Table 10.

[Table 10]

| | Residual LiOH | $Li_2CO_3$ | Sum |
|---|---|---|---|
| Example 21 | 5927 | 3950 | 9877 |
| Comparative Example 6 | 9469 | 11466 | 20935 |

<Experimental Example> Measurement of tap density and BET surface area

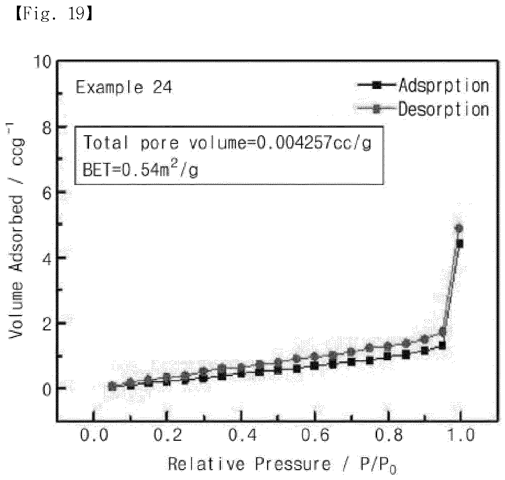

The tap density and surface area by the BET method of the particles prepared in Example 21 and Comparative Example 6 are as presented in the following Table 11 and illustrated in Fig. 19, respectively.

[Table 11]

| | Tap density |
|---|---|
| Example 1-21 | 2.54 |
| Comparative Example 1-6 | 2.37 |

It can be seen that the tap density is greatly improved in the active material particles prepared in Example of the inventive concept as compared to Comparative Example.

<Examples 2> Case having constant concentration in core portion

Into a coprecipitation reactor (volume: 16 L, output of rotary motor: 80 W or more), 2.5 L of distilled water was

introduced, $N_2$ gas was then supplied thereto at a rate of 2 L/min, and the distilled water was stirred at 400 rpm while maintaining the temperature of the reactor at 45°C.

A first aqueous metal solution was prepared by mixing nickel sulfate, cobalt sulfate, and manganese sulfate so as to have concentrations of $Ni_{x1}Co_{y1}Mn_{z1}OH_2$ (X1, Y1, Z1), the first aqueous metal solution was continuously introduced into the reactor at 0.7 L/hr, and an ammonia solution having a concentration of 25 mol was also continuously introduced into the reactor at 0.07 L/hr, thereby forming the inner core portion having constant concentrations of nickel, manganese, and cobalt.

A second aqueous metal solution was prepared so as to have a composition of $Ni_{x2}Co_{y2}Mn_{z2}OH_2$ (x2, y2, z2), the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the first concentration gradient portion having a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, a third aqueous metal solution was prepared by mixing nickel sulfate, cobalt sulfate, and manganese sulfate so as to have a constant composition of $Ni_{x3}Co_{y3}Mn_{z3}OH_2$, and the third aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the second concentration gradient portion having a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, only the third aqueous metal solution was supplied into the reactor to form the shell portion.

The concentrations of the aqueous metal solutions in Examples 2-1 to 2-4 are as presented in the following Table 12.

[Table 12]

| | First aqueous metal solution | | | Second aqueous metal solution | | | Third aqueous metal solution | | | |
|---|---|---|---|---|---|---|---|---|---|---|
| | Ni | Co | Mn | Ni | Co | Mn | Ni | Co | Mn | Thickness of shell portion |
| Example 2-1 | 95 | 2 | 3 | 85 | 6 | 9 | 67 | 9 | 24 | 0.5 μm |
| Example 2-2 | 98 | 0 | 2 | 88 | 4 | 8 | 67 | 9 | 24 | 0.3 μm |
| Example 2-3 | 85 | 5 | 10 | 78 | 6 | 16 | 60 | 15 | 25 | 0.5 μm |
| Example 2-4 | 97 | 0 | 3 | 82 | 5 | 13 | 55 | 15 | 30 | 0.3 μm |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples>

In Comparative Example 2-1, positive electrode active material particles having constant concentrations of nickel, manganese, and cobalt in the entire particle were prepared using an aqueous metal solution having a composition of $Ni_{82}Co_5Mn_{13}OH_2$ which corresponds to the average composition of the entire particle in Example 2-2.

In Comparative Example 2-2, positive electrode active material particles having constant concentrations of nickel, manganese, and cobalt in the entire particle were prepared using an aqueous metal solution having a composition of $Ni_{76}Co_7Mn_{17}OH_2$ which corresponds to the average composition of the entire particle in Example 2-4.

<Experimental Example> Taking of EDX image

The concentrations of Ni, Mn, and Co depending on the distance from the center in the particles prepared in Example 2-2 were measured by EDX, and the results are illustrated in Fig. 42.

From Fig. 42, it can be seen that the first concentration gradient portion and the second concentration gradient portion are disposed between the inner core portion and the outermost shell portion which have constant concentrations of nickel, manganese, and cobalt in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 2-1 to 2-4 and Comparative Examples 2-1 and 2-2 were measured, and the results are presented in the following Table 13.

[Table 13]

|  | Discharge capacity | Cycle-life characteristics (100th) | DSC |
|---|---|---|---|
| Example 2-1 | 217.6 mAh/g | 93.6% | 263.5°C |
| Example 2-2 | 220.1 mAh/g | 93.1% | 259.6°C |
| Example 2-3 | 205.3 mAh/g | 94.8% | 272.7°C |
| Example 2-4 | 211.8 mAh/g | 94.3% | 268.2°C |
| Comparative Example 2-1 | 209.3 mAh/g | 81.7% | 243.6°C |
| Comparative Example 2-2 | 198.7 mAh/g | 83.2% | 247.3°C |

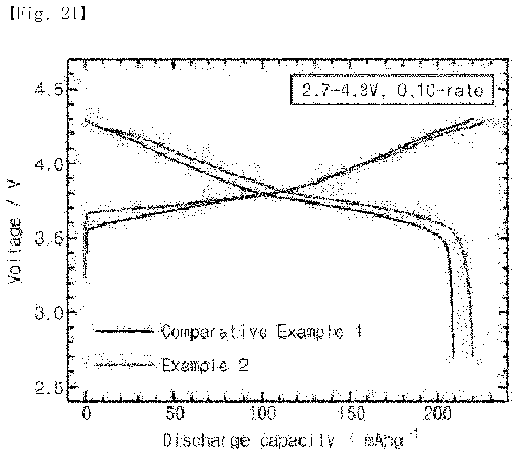

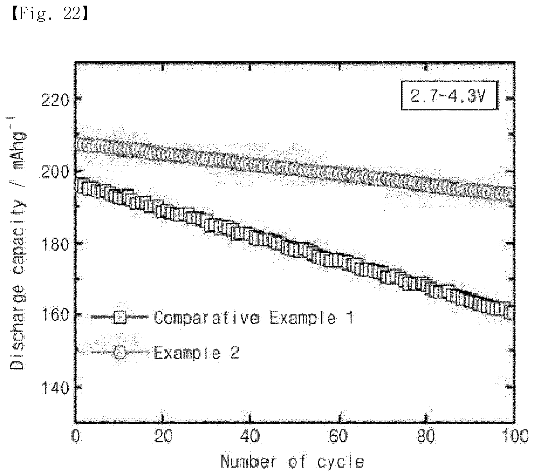

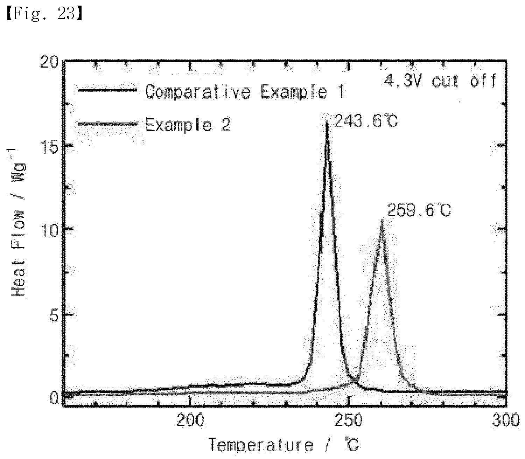

The charge and discharge characteristics, cycle-life characteristics, and DSC characteristics of the particles prepared in Example 2-2 and Comparative Example 2-1 were measured, and the results are illustrated in Figs. 21 to 23, respectively.

From Figs. 21 to 23, it has been confirmed that the average composition of the particles in Example 2-2 is the same as the composition of the particles in Comparative Example 2-1, but the charge and discharge characteristics, cycle-life characteristics, and thermal stability are greatly improved in Example 2-2 as compared to Comparative Example 2-1 since the particles in Example 2-2 includes the inner core portion, and the first concentration gradient portion, the second concentration gradient portion, and the shell portion continuous to the second concentration gradient portion although the average concentrations of nickel, manganese, and cobalt thereof are the same as those of the particles in Comparative Example 2-1.

<Examples>

Into a coprecipitation reactor (volume: 16 L, output of rotary motor: 80 W or more), 2.5 L of distilled water was introduced, $N_2$ gas was then supplied thereto at a rate of 2 L/min, and the distilled water was stirred at 400 rpm while maintaining the temperature of the reactor at 45°C.

A first aqueous metal solution was prepared by mixing nickel sulfate, cobalt sulfate, and manganese sulfate so as to have concentrations of $Ni_{x1}Co_{y1}Mn_{z1}OH_2$ (X1, Y1, Z1), the first aqueous metal solution was continuously introduced into the reactor at 0.7 L/hr, and an ammonia solution having a concentration of 25 mol was also continuously introduced into the reactor at 0.07 L/hr, thereby forming the inner core portion having constant concentrations of nickel, manganese, and cobalt.

A second aqueous metal solution was prepared so as to have a composition of $Ni_{x2}Co_{y2}Mn_{z2}OH_2$ (x2, y2, z2), the first aqueous metal solution and the second aqueous metal solution were continuously introduced into the reactor at 0.7 L/hr while mixing them and changing the mixing ratio thereof, and an ammonia solution having a concentration of 25 mol was also continuously introduced into the reactor at 0.07 L/hr, thereby forming the first concentration gradient portion having a concentration gradient. In addition, a sodium hydroxide solution having a concentration of 5 mol was supplied into the reactor in order to adjust the pH so that the pH was maintained at 11.5. The speed of impeller was controlled at 400 rpm.

Thereafter, a third aqueous metal solution was prepared by mixing nickel sulfate, cobalt sulfate, and manganese sulfate so as to have a constant composition of $Ni_{x3}Co_{y3}Mn_{z3}OH_2$ and only the third aqueous metal solution was supplied into the reactor to form the shell portion. In addition, a sodium hydroxide solution having a concentration of 5 mol was supplied into the reactor in order to adjust the pH so that the pH was maintained at 11.5. The speed of impeller was controlled at 400 rpm.

The concentrations of the aqueous metal solutions in Examples 2-5 to 2-7 are as presented in the following Table 14.

[Table 14]

| | First aqueous metal solution | | | Second aqueous metal solution | | | Third aqueous metal solution | | | |
|---|---|---|---|---|---|---|---|---|---|---|
| | Ni | Co | Mn | Ni | Co | Mn | Ni | Co | Mn | Thickness of shell portion |
| Example 2-5 | 98 | 0 | 2 | 69 | 8 | 23 | 59 | 11 | 30 | 0.5 $\mu$m |
| Example 2-6 | 90 | 3 | 7 | 70 | 10 | 20 | 50 | 15 | 35 | 0.3 $\mu$m |
| Example 2-7 | 80 | 10 | 10 | 60 | 15 | 25 | 40 | 20 | 40 | 0.3 $\mu$m |

The composite metal hydroxide thus prepared was filtered, washed with water, and then dried for 12 hours in a hot air dryer at 110°C. The composite metal hydroxide and lithium hydroxide (LiOH) were mixed at a molar ratio of 1 : 1, the mixture was subjected to the preliminary firing by heating at a temperature rise rate of 2°C/min and then maintaining at 450°C for 10 hours and then fired at from 700 to 900°C for 10 hours, thereby obtaining a positive electrode active material powder.

<Comparative Examples>

In Comparative Example 2-3, positive electrode active material particles having constant concentrations of nickel, manganese, and cobalt in the entire particle were prepared using an aqueous metal solution having a composition of $Ni_{81}Co_5Mn_{14}OH_2$ which corresponds to the average composition of the entire particle in Example 2-5.

In Comparative Example 2-4, positive electrode active material particles having constant concentrations of nickel, manganese, and cobalt in the entire particle were prepared using an aqueous metal solution having a composition of $Ni_{68}Co_{13}Mn_{19}OH_2$ which corresponds to the average composition of the entire particle in Example 2-4.

<Experimental Example> Taking of EDX image

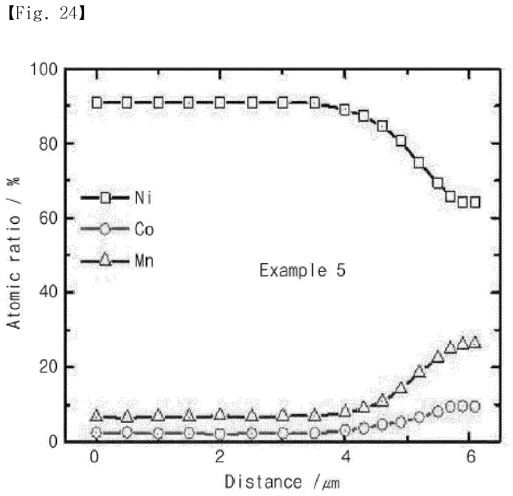

The concentrations of Ni, Mn, and Co depending on the distance from the center in the particles prepared in Example 2-5 were measured by EDX, and the results are illustrated in Fig. 24.

From Fig. 24, it can be seen that the concentration gradient portion is formed on the outside of the inner core portion and the shell portion having constant concentrations of nickel, manganese, and cobalt is formed on the concentration gradient portion in the case of the particles according to Example of the inventive concept.

<Experimental Example> Measurement of charge and discharge characteristics, cycle-life characteristics, and DSC

The charge and discharge characteristics, cycle-life characteristics, and DSC characteristics of the batteries containing the active materials prepared in Examples 2-5 to 2-7 and Comparative Examples 2-3 and 2-4 were measured, and the results are presented in the following Table 15.

[Table 15]

| | Discharge capacity | Cycle-life characteristics (100th) | DSC |
|---|---|---|---|
| Example 2-5 | 220.4 mAh/g | 94.7% | 269.7°C |
| Example 2-6 | 215.7 mAh/g | 94.9% | 272.2°C |
| Example 2-7 | 201.8 mAh/g | 96.3% | 286.4°C |
| Comparative Example 2-3 | 206.7 mAh/g | 84.8% | 234.3°C |
| Comparative Example 2-4 | 193.2 mAh/g | 88.3% | 271.6°C |

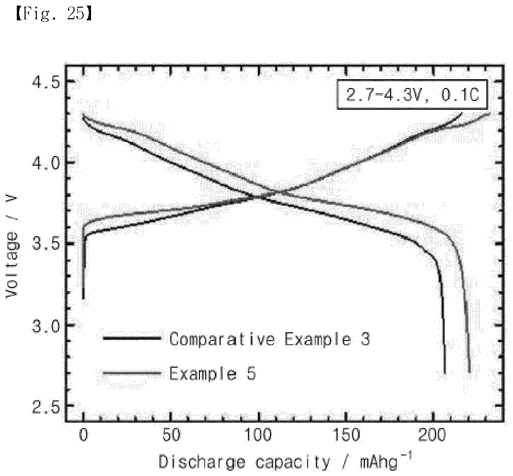

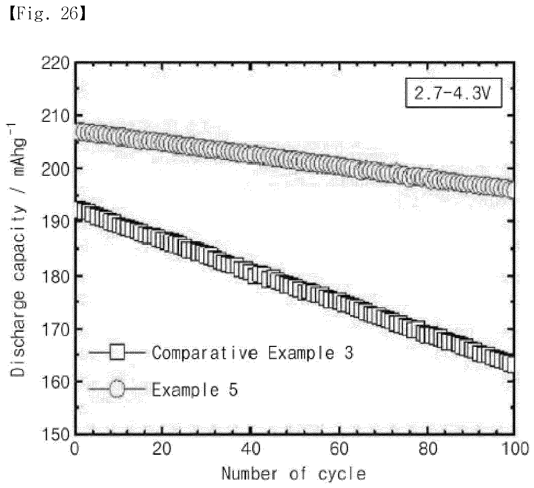

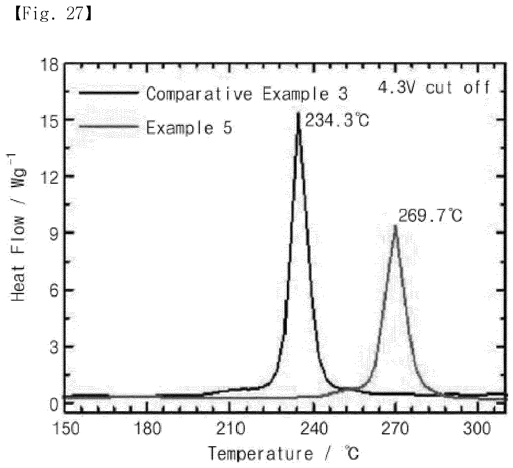

The charge and discharge characteristics, cycle-life characteristics, and DSC characteristics of the particles prepared in Example 2-5 and Comparative Example 2-3 were measured, and the results are illustrated in Figs. 25 to 27, respectively.

From Figs. 25 to 27, it has been confirmed that the average composition of the particles in Example 2-5 is the same as the composition of the particles in Comparative Example 2-3, but the charge and discharge characteristics, cycle-life characteristics, and thermal stability are greatly improved in Example 2-5 as compared to Comparative Example 2-3 since the particles in Example 2-5 includes the shell portion having a constant concentration on the outside of the inner core portion and the first concentration gradient portion.

<Experimental Example> Measurement of residual lithium

The amounts of LiOH and $Li_2CO_3$ were measured in order to determine the amount of residual lithium in the particles prepared in Example 2-5 and Comparative Example 2-3, and the results are as presented in the following Table 16.

[Table 16]

| Sample | LiOH | $Li_2CO_3$ | Sum of residual lithium |
|---|---|---|---|
| Comparative Example 2-3 | 7124 | 5397 | 12521 |
| Example 2-5 | 3512 | 2699 | 6211 |

It has been confirmed that residual lithium is improved by nearly 50% in the active material according to Example 2-5 of the inventive concept as compared to the active material prepared in Comparative example 2-3.
In the positive electrode active material according to embodiments of the inventive concept, a shell portion having a constant concentration is formed on the surface of the core portion in which concentrations of nickel, manganese, and cobalt have gradients, and thus the positive electrode active material exhibits excellent cycle-life characteristics and charge and discharge characteristics, has a stabilized crystal structure while having a high capacity, and is structurally stabilized even when being used at a high voltage.

**Claims**

1.   A positive electrode active material for lithium secondary battery, the positive electrode active material comprising:

a core portion;
a concentration gradient portion that is formed on the outside of the core portion and has gradients of concentrations of nickel, manganese, and cobalt; and
a shell portion that is formed on the outside of the concentration gradient portion and has constant concentrations of nickel, manganese, and cobalt,

wherein nickel is the main component out of nickel, manganese, and cobalt.

2.   The positive electrode active material of claim 1, wherein the core portion has constant concentrations of nickel, manganese, and cobalt,
preferably wherein the concentration of nickel in the core portion is equal to the maximum value of the concentration of nickel in the concentration gradient portion.

3.   The positive electrode active material of claim 1, wherein the core portion has gradients of concentrations of nickel, manganese, and cobalt.

4.   The positive electrode active material of claim 3, wherein the core portion includes n ($5 \geq n \geq 1$) core portions in which magnitudes of concentration gradients of nickel, manganese, and cobalt are represented by CSn-Ni, CSn-Mn, and CSn-Co, respectively.

5.   The positive electrode active material of claim 3, wherein the concentration gradients of nickel, manganese, and cobalt in the core portion have linear shapes or curved shapes.

6.   The positive electrode active material of claim 4, wherein the magnitudes CSn-Ni, CSn-Mn, and CSn-Co of concentration gradients of nickel, manganese, and cobalt in the n core portions and the magnitudes CG-Ni, CG-Mn, and CG-Co of concentration gradients of nickel, manganese, and cobalt in the concentration gradient portion satisfy the following relational expressions:

$$|CSn\ Ni| \leq |CG\text{-}Ni|,$$

$$|CSn\text{-}Mn| \leq |CG\text{-}Mn|,$$

and

$$|CSn\text{-}Co| \leq |CG\text{-}Co|.$$

7. The positive electrode active material of claim 1, wherein the concentration gradient portion includes n ($5 \geq n \geq 1$) concentration gradient portions in which magnitudes of concentration gradients of nickel, manganese, and cobalt are represented by CGn-Ni, CGn-Mn, and CGn-Co, respectively.

8. The positive electrode active material of claim 1, wherein the shell portion includes n ($5 \geq n \geq 1$) shell portions in which the concentrations of nickel, manganese, and cobalt are represented by SCn-Ni, SCn-Mn, and SCn-Co, respectively.

9. The positive electrode active material of claim 8, wherein the concentrations SCn-Ni, SCn-Mn, and SCn-Co of nickel, manganese, and cobalt in the $n^{th}$ shell portion satisfy the following relational expressions:

$$0.3 \leq SCn\text{-}Ni \leq 0.8,$$

$$0.2 \leq SCn\text{-}Mn \leq 0.4,$$

and

$$0.05 \leq SCn\text{-}Co \leq 0.2.$$

10. The positive electrode active material of claim 8, wherein the concentrations SC1-Ni, SC1-Mn, and SC1-Co of nickel, manganese, and cobalt in the first shell portion are equal to the concentrations of nickel, manganese, and cobalt of the outermost part of the concentration gradient portion, respectively.

11. The positive electrode active material of claim 8, wherein the concentration SC1-Ni of nickel in the first shell portion is equal to the minimum concentration of nickel in the concentration gradient portion.

12. The positive electrode active material of claim 1, wherein the concentration gradients of nickel, manganese, and cobalt in the concentration gradient portion have linear shapes or curved shapes.

13. The positive electrode active material of claim 1, wherein

    (a) the shell portion has a thickness of from 0.1 $\mu$m to 0.6 $\mu$m; or
    (b) a volume of the shell portion is 30% or less of a total volume of a particle.

14. The positive electrode active material of claim 1, wherein

    (a) a content of $Li_2CO_3$ of a surface of the positive electrode active material is 2,000 ppm or less; or
    (b) a content of LiOH of a surface of the positive electrode active material is 2,000 ppm or less.

15. A lithium secondary battery comprising the positive electrode active material of any one of claims 1 to 14.

**Patentansprüche**

1. Positives aktives Elektrodenmaterial für eine Lithium-Sekundärbatterie, wobei das positive aktive Elektrodenmaterial Folgendes umfasst:

   einen Kernabschnitt;
   einen Konzentrationsgradientenabschnitt, der an der Außenseite des Kernabschnitts gebildet ist und Konzentrationsgradienten von Nickel, Mangan und Cobalt hat; und
   einen Gehäuseabschnitt, der an der Außenseite des Konzentrationsgradientenabschnitts gebildet ist und konstante Konzentrationen von Nickel, Mangan und Cobalt hat,

   wobei Nickel die Hauptkomponente aus Nickel, Mangan und Cobalt ist.

2. Positives aktives Elektrodenmaterial nach Anspruch 1, wobei der Kernabschnitt konstante Konzentrationen von Nickel, Mangan und Cobalt hat,
   bevorzugt wobei die Konzentration von Nickel im Kernabschnitt gleich dem Maximalwert der Konzentration von Nickel im Konzentrationsgradientenabschnitt ist.

3. Positives aktives Elektrodenmaterial nach Anspruch 1, wobei der Kernabschnitt Konzentrationsgradienten von Nickel, Mangan und Cobalt hat.

4. Positives aktives Elektrodenmaterial nach Anspruch 3, wobei der Kernabschnitt n ($5 \geq n \geq 1$) Kernabschnitte beinhaltet, in denen Größen von Konzentrationsgradienten von Nickel, Mangan und Cobalt jeweils durch CSn-Ni, CSn-Mn und CSn-Co dargestellt sind.

5. Positives aktives Elektrodenmaterial nach Anspruch 3, wobei die Konzentrationsgradienten von Nickel, Mangan und Cobalt im Kernabschnitt lineare Formen oder gekrümmte Formen haben.

6. Positives aktives Elektrodenmaterial nach Anspruch 4, wobei die
   Größen CSn-Ni, CSn-Mn und CSn-Co von Konzentrationsgradienten von Nickel, Mangan und Cobalt in den n Kernabschnitten und die Größen von CG-Ni, CG-Mn und CG-Co von Konzentrationsgradienten von Nickel, Mangan und Cobalt im Konzentrationsgradientenabschnitt die folgenden Vergleichsexpressionen erfüllen:

$$|CSn\ Ni| \leq |CG\text{-}Ni|,$$

$$|CSn\text{-}Mn| \leq |CG\text{-}Mn|$$

und

$$|CSn\text{-}Co| \leq |CG\text{-}Co|.$$

7. Positives aktives Elektrodenmaterial nach Anspruch 1, wobei der Konzentrationsgradientenabschnitt n ($5 \geq n \geq 1$) Konzentrationsgradientenabschnitte beinhaltet, in denen Größen von Konzentrationsgradienten von Nickel, Mangan und Cobalt jeweils durch CGn-Ni, CGn-Mn und CGn-Co dargestellt sind.

8. Positives aktives Elektrodenmaterial nach Anspruch 1, wobei der Gehäuseabschnitt n ($5 \geq n \geq 1$) Gehäuseabschnitte beinhaltet, in denen die Konzentrationen von Konzentrationsgradienten von Nickel, Mangan und Cobalt jeweils durch SCn-Ni, SCn-Mn und SCn-Co dargestellt sind.

9. Positives aktives Elektrodenmaterial nach Anspruch 8, wobei die Konzentrationen SCn-Ni, SCn-Mn und SCn-Co von Nickel, Mangan und Cobalt im n-ten Gehäuseabschnitt die folgenden Vergleichsexpressionen erfüllen:

$$0,3 \leq SCn\text{-}Ni \leq 0,8,$$

$$0,2 \leq SCn\text{-}Mn \leq 0,4$$

und

$$0,05 \leq SCn\text{-}Co \leq 0,2.$$

**10.** Positives aktives Elektrodenmaterial nach Anspruch 8, wobei die Konzentrationen SC1-Ni, SC1-Mn und SC1-Co von Nickel, Mangan und Cobalt im ersten Gehäuseabschnitt gleich den Konzentrationen von jeweils Nickel, Mangan und Cobalt des äußersten Teils des Konzentrationsgradientenabschnitts sind.

**11.** Positives aktives Elektrodenmaterial nach Anspruch 8, wobei die Konzentration SC1-Ni von Nickel im ersten Gehäuseabschnitt gleich der Minimalkonzentration von Nickel im Konzentrationsgradientenabschnitt ist.

**12.** Positives aktives Elektrodenmaterial nach Anspruch 1, wobei die Konzentrationsgradienten von Nickel, Mangan und Cobalt im Konzentrationsgradientenabschnitt lineare Formen oder gekrümmte Formen haben.

**13.** Positives aktives Elektrodenmaterial nach Anspruch 1, wobei

(a) der Gehäuseabschnitt eine Dicke von 0,1 $\mu$m bis 0,6 $\mu$m hat; oder
(b) ein Volumen des Gehäuseabschnitts 30 % oder weniger eines Gesamtvolumens eines Partikels ist.

**14.** Positives aktives Elektrodenmaterial nach Anspruch 1, wobei

(a) ein Gehalt von $Li_2CO_3$ einer Oberfläche des positiven aktiven Elektrodenmaterials 2.000 ppm oder weniger ist; oder
(b) ein Gehalt von LiOH einer Oberfläche des positiven aktiven Elektrodenmaterials 2.000 ppm oder weniger ist.

**15.** Lithium-Sekundärbatterie, umfassend das positive aktive Elektrodenmaterial nach einem der Ansprüche 1 bis 14.


**Revendications**

**1.** Matériau actif d'électrode positive pour batterie secondaire au lithium, le matériau actif d'électrode positif comprenant :

une partie de coeur ;
une partie de gradient de concentration qui est formée sur l'extérieur de la partie de coeur et présente des gradients de concentrations de nickel, de manganèse et de cobalt ; et
une partie d'enveloppe qui est formée sur l'extérieur de la partie de gradient de concentration et présente des concentrations constantes de nickel, de manganèse et de cobalt,

le nickel étant le constituant principal parmi le nickel, le manganèse et le cobalt.

**2.** Matériau actif d'électrode positive de la revendication 1, dans lequel la partie de coeur présente des concentrations constantes de nickel, de manganèse et de cobalt,
la concentration de nickel dans la partie de coeur étant de préférence égale à la valeur maximale de la concentration de nickel dans la partie de gradient de concentration.

**3.** Matériau actif d'électrode positive de la revendication 1, dans lequel la partie de coeur présente des gradients de concentrations de nickel, de manganèse et de cobalt.

**4.** Matériau actif d'électrode positive de la revendication 3, dans lequel la partie de coeur comprend n ($5 \geq n \geq 1$) parties de coeur dans lesquelles les amplitudes de gradients de concentrations de nickel, de manganèse et de cobalt sont représentées par CSn-Ni, CSn-Mn et CSn-Co, respectivement.

**5.** Matériau actif d'électrode positive de la revendication 3, dans lequel les gradients de concentrations de nickel, de manganèse et de cobalt dans la partie de coeur ont des formes linéaires ou des formes courbes.

**6.** Matériau active d'électrode positive de la revendication 4, dans lequel les amplitudes CSn-Ni, CSn-Mn et CSn-Co de gradients de concentrations de nickel, de manganèse et de cobalt dans les n parties de coeur et les amplitude CG-Ni, CG-Mn et CG-Co de gradients de concentrations de nickel, de manganèse et de cobalt dans la partie de gradient de concentration satisfont les expressions relationnelles suivantes :

$$|\text{CSn Ni}| \leq |\text{CG-Ni}|,$$

$$|\text{CSn-Mn}| \leq |\text{CG-Mn}|$$

et

$$|\text{CSn-Co}| \leq |\text{CG-Co}|.$$

**7.** Matériau active d'électrode positive de la revendication 1, dans lequel les la partie de gradient de concentration comprend n ($5 \geq n \geq 1$) parties de gradient de concentration dans lesquelles les amplitudes de gradients de concentrations de nickel, de manganèse et de cobalt sont représentées par CGn-Ni, CGn-Mn et CGn-Co, respectivement.

**8.** Matériau actif d'électrode positive de la revendication 1, dans lequel la partie d'enveloppe comprend n ($5 \geq n \geq 1$) parties d'enveloppe dans lesquelles les concentrations de nickel, de manganèse et de cobalt sont représentées par SCn-Ni, SCn-Mn et SCn-Co, respectivement.

**9.** Matériau actif d'électrode positive de la revendication 8, dans lequel les concentrations SCn-Ni, SCn-Mn et SCn-Co de nickel, de manganèse et de cobalt dans la $n^e$ partie de coeur satisfont les expressions relationnelles suivantes :

$$0{,}3 \leq \text{SCn-Ni} \leq 0{,}8,$$

$$0{,}2 \leq \text{SCn-Mn} \leq 0{,}4,$$

et

$$0{,}05 \leq \text{SCn-Ni} \leq 0{,}2.$$

**10.** Matériau actif d'électrode positive de la revendication 8, dans lequel les concentrations SCl-Ni, SCl-Mn et SCl-Co de nickel, de manganèse et de cobalt dans la première partie d'enveloppe sont égales aux concentrations de nickel, de manganèse et de cobalt de la partie la plus externe de la partie de gradient de concentration, respectivement.

**11.** Matériau actif d'électrode positive de la revendication 8, dans lequel la concentration SC1-Ni de nickel dans la première partie d'enveloppe est égale à la concentration minimale de nickel dans la partie de gradient de concentration.

**12.** Matériau actif d'électrode positive de la revendication 1, dans lequel les gradients de concentrations de nickel, de manganèse et de cobalt dans la partie de gradient de concentration ont des formes linéaires ou des formes courbes.

**13.** Matériau active d'électrode positive de la revendication 1, dans lequel

(a) la partie d'enveloppe a une épaisseur de 0,1 $\mu$m à 0,6 $\mu$m ; ou
(b) un volume de la partie d'enveloppe est de 30 % ou moins d'un volume total d'une particule.

**14.** Matériau active d'électrode positive de la revendication 1, dans lequel

(a) une teneur en $Li_2CO_3$ d'une surface du matériau actif d'électrode positive est de 2000 ppm ou moins ; ou
(b) une teneur en LiOH d'une surface du matériau actif d'électrode positive est de 2000 ppm ou moins.

**15.** Batterie secondaire au lithium comprenant le matériau actif d'électrode positive de l'une quelconque des revendications 1 à 14.

【Fig. 1】

【Fig. 2】

【Fig. 3】

【Fig. 4】

【Fig. 5】

【Fig. 6】

【Fig. 7】

【Fig. 8】

【Fig. 9】

【Fig. 10】

【Fig. 11】

【Fig. 12】

【Fig. 13】

【Fig. 14】

【Fig. 15】

【Fig. 16】

【Fig. 17】

【Fig. 18】

【Fig. 19】

【Fig. 20】

【Fig. 21】

【Fig. 22】

【Fig. 23】

【Fig. 24】

【Fig. 25】

【Fig. 26】

【Fig. 27】

**REFERENCES CITED IN THE DESCRIPTION**

**Patent documents cited in the description**

- EP 0872450 A
- KR 20050083869
- KR 20070097923

- CN 102368548 B
- CN 102891309 A

**Non-patent literature cited in the description**

- *J. Power Sources,* 2004, vol. 134, 293